# EUROPEAN PATENT APPLICATION

(11) **EP 2 671 478 A1**
(43) Date of publication of application: **11.12.2013**
(21) Application number: 13004171.8
(22) Date of filing: 04.06.2008
(51) Int. Cl.: A47J 31/18

(54) **A Coffee Machine**

(30) Priority: 05.06.2007 TR 200703866
(62) Divisional of application: 08760475.7
(71) Applicant: Arçelik Anonim Sirketi, 34950 Istanbul (TR)
(72) Inventor: Caglar, Talip, 34950 Istanbul (TR); Onder, Fesligil, 34950 Istanbul (TR)
(74) Representative: Grünecker, Kinkeldey, Stockmair & Schwanhäusser

(57) **Abstract**

The present invention relates to a coffee machine (1) that comprises a coffee grounds fortune teller device (2) that maintains the containers like the coffee cup (F) and the saucer (P) placed on the coffee cup (F) to be positioned appropriately for reading fortunes after drinking Turkish coffee, reading and interpreting the coffee grounds (T) marks settled and dried on the coffee cup (F) and saucer (P) that form certain figures and presents these interpretations to the user thereby reading the fortunes of the user.

## Description

The present invention relates to a coffee machine that can read fortunes by reading and interpreting the figures formed by the coffee grounds left in the coffee cups.

The automatic coffee machines that prepare Turkish coffee in accordance with its traditional flavor are explained in the International Patent Applications No WO2004069013, WO2005122687, WO2005122850, WO2005122852, WO2006000961, WO2006000962 and WO2006008583. Turkish coffee is poured in coffee cups for serving after it is prepared. Turkish coffee, after the preparation, is poured into a coffee cup and the cup is placed on a saucer to be served. In Turkish coffee the coffee particles do not completely dissolve in the water and after boiling settle down in the liquid to form the coffee grounds. There is a tradition of reading fortunes in coffee grounds after drinking coffee in places where Turkish coffee is served. In order to read fortunes in coffee grounds, the coffee cup with the settled down coffee grounds is turned upside down and placed on the saucer, and the coffee grounds trickle down towards the saucer by leaving marks on the inner surface of the coffee cup. After waiting for a while for the cup to cool down, it is taken off the saucer and fortune is read by looking at and interpreting the marks of the dried coffee grounds on the inner surface of the cup and the saucer. The user demands that the present machines that prepare Turkish coffee, besides making coffee, should also have the ability of reading fortunes in coffee grounds after drinking coffee.

The aim of the present invention is the realization of a coffee machine that can read fortunes in coffee grounds of a user who drinks Turkish coffee.

The coffee machine realized in order to attain the aim of the present invention is explicated in the claims.

The coffee machine of the present invention is used to make Turkish coffee in accordance with the appropriate taste and consistency and comprises a coffee grounds fortune teller device. The coffee grounds fortune teller device reads and interprets the coffee grounds settled on the coffee cup and saucer wherein coffee is put and thus reads the fortune of the user in the coffee grounds.

The cup for drinking Turkish coffee is turned upside down on the saucer after drinking coffee and placed in the chamber in the coffee machine. When the containers are detected to be cooled sufficiently by the temperature sensor, the user is warned by an alarm upon deciding that the coffee grounds in the containers are dry and ready for fortune telling.

The user removes the cup and saucer from the chamber and this time places in the chamber separately and the coffee grounds on the cup and saucer are read and interpreted by the coffee grounds fortune teller device.

A camera is included in the coffee grounds fortune teller device that scans the inner surface of the cup or the saucer for taking images of the coffee ground marks, the cup, saucer or the camera are moved by means of a movement mechanism, for example by rotating 360 degrees, so that the entire inner surface of the cup and saucer is scanned by the camera.

The coffee grounds fortune teller device furthermore comprises a memory wherein the symbols, each having a different meaning and a significance level are stored, to which the figures formed by the coffee grounds recorded with the camera will be compared, a control unit that interprets by comparing the figures scanned by the camera with the symbols stored in the memory and prepares a scenario to be presented to the user and a telling means for transmitting the scenario prepared by the control unit to the user.

During the scanning of the camera, the figures under a specific size are left out the scope of evaluation by the control unit. By this elimination, very small coffee grounds marks are not included in the evaluation thus preventing the increase in the processing load by the parasitic images.

The coffee machine realized in order to attain the aim of the present invention is illustrated in the attached figures, where:

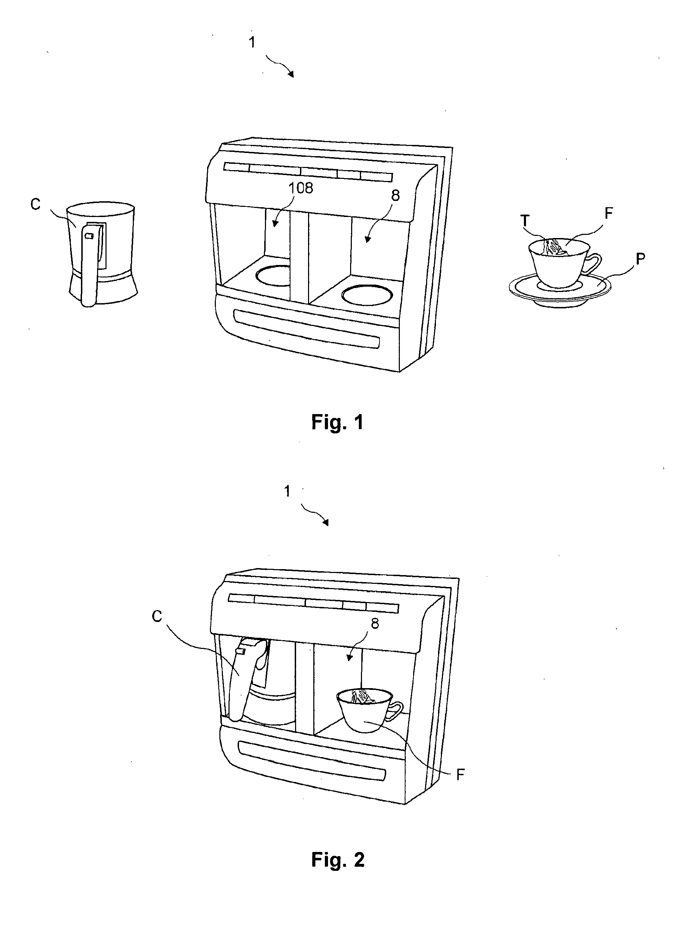

Figure 1 - is the perspective view of a coffee machine, a coffee pot, a cup and a saucer.
Figure 2 - is the perspective view of a coffee machine wherein a coffee pot and a cup are placed in the chambers thereof.

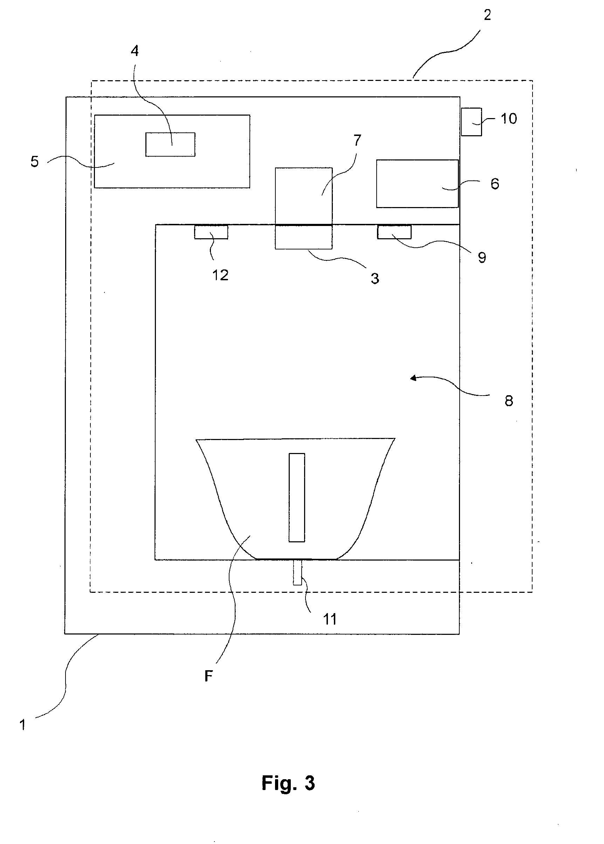

Figure 3 - is the schematic view of a coffee grounds fortune teller device

The elements illustrated in the figures are numbered as follows:
1- Coffee machine
2- Coffee grounds fortune teller device
3- Camera
4- Memory
5- Control unit
6- Telling means
7- Movement mechanism
8- 108 - Chamber
9- Temperature sensor
10- Alarm
11- Indicator
12 - Light source

The coffee machine (1) of the present invention used in preparing Turkish coffee comprises a coffee grounds fortune teller device (2) that maintains the containers like the coffee cup (F) wherein coffee is put and the saucer (P) placed on the coffee cup (F) to be positioned appropriately for reading fortunes after drinking coffee, reading and interpreting the coffee grounds (T) marks settled and dried on the coffee cup (F) and saucer (P) that form certain figures and presents these interpretations to the user.

The coffee grounds fortune teller device (2) of the present invention comprises a camera (3) that scans the inner surface of the cup (F) or the saucer (P) for taking images of the coffee ground marks (T), a memory (4) wherein the symbols, each having a different meaning and a significance level to which the figures formed by the coffee grounds (T) detected with the camera (3) will be compared and the interpretations of these symbols are recorded, a control unit (5) that matches the figures scanned by the camera (3) with the symbols stored in the memory (4) and prepares a scenario to be presented to the user by incorporating the interpretations of these symbols with a software like fuzzy logic maintaining content integrity and a telling means (6) such as an Lcd screen, loud speaker or printer for transmitting the scenario prepared by the control unit (5) to the user in picture, audio or print out format.

The coffee grounds fortune teller device (2) furthermore comprises a movement mechanism (7) that moves, e.g. rotates, the cup (F), saucer (P) or the camera (3) during the scanning process of the camera (3), a chamber (8) wherein the cup (F), and/or the saucer (P) having coffee grounds (T) thereon are placed for reading - interpreting the coffee grounds (T) marks, a temperature sensor (9) that detects the temperature of the cup (F) and the saucer (P), an alarm (10) that warns the user visually and/or aurally at the start and end of the coffee ground (T) interpretation algorithm, an indicator (11) for placing the cup (F) or the saucer (P) in the proper position in the chamber (8) and a light source (12) for illuminating the inner surface of the cup (F) or the saucer (P).

The process of coffee grounds fortune telling is comprised of the following steps:
- After drinking Turkish coffee, the cup (F) with coffee grounds (T) settled on the base is turned upside down on the saucer (P).
- The cup (F) and/or the saucer (P) is placed in the chamber (8).
- The temperature of the cup (F) and/or the saucer (P) is detected by the temperature sensor (9).
- When the cup (F) and/or the saucer (P) is sufficiently cooled, the user is warned by the alarm (10) by deciding that the coffee grounds (T) is dry and ready to be read.
- The cup (F) and/or the saucer (P) is removed from the chamber (8) and the cup (F) is placed into the chamber (8) with the open side facing upwards.
- The coffee grounds (T) marks are scanned by the camera (3).
- The coffee grounds (T) marks are analyzed and interpreted by the memory (4) and the control unit (5).
- When the process of reading and interpreting the cup (F) is over, the user is warned by the alarm (10).
- The cup (F) is removed from the chamber (8) and the saucer (P) is placed into the chamber (8).
- The processes of reading and interpreting the coffee grounds (T) marks are repeated for the saucer (P).
- The user is given a fortune telling output by the telling means (6).

In the embodiment of the present invention, the coffee grounds (T) marks detected by scanning with the camera (3) are analyzed by the control unit (5) in two categories as the big figures (main lines) and small figures.

The big figures (main lines) are formed by the dark colored areas covered by the coffee grounds (T) and the light colored areas wherein the coffee grounds (T) don't exist. In the memory (4) the data determining the main lines like the proportion of the dark and light colored areas to each other and the changes from the dark colored areas to light colored areas are recorded. The big figures detected by the camera (3) are compared by the control unit (5) with the information in the memory (4) wherein the interpretation relating to big figures are stored. The big figures signify great changes in interpretation and the main framework of the scenario to be formed by the control unit (5) is derived as a result of the big figures analysis.

The small figures detected by the camera (3) are compared by the control unit (5) with the symbols stored in the memory (4), e.g. key, hand, mountain, path or moon, with each one having a different meaning and a degree of importance and after resemblance is established with the small figure caught by the camera (3) and the symbol in the memory (4), the small figure is assigned the meaning of the symbol it resembles.

The small figures, matched with the symbols by the control unit (5), are described as the cause-result of the interpreted big figures and are incorporated in the scenario determined by the big figures thereby an integrated scenario is formed by assembling the interpretations of the big figures and the small figures.

In the embodiment of the present invention, the inner surfaces of the cup (F) and the saucer (P) are scanned all around (360 degrees) by the camera (3) with the help of the movement mechanism (7). The scanning processes by the camera (3) are performed by assuming that the inner surfaces of the cup (F) and the saucer (P) are made up of segments smaller than 360 degrees (for example, as 10[deg.] x 36 segments, 30[deg.] x 12 segments or 60[deg.] x 6 segments). The segments smaller than 360 degrees are first evaluated separately then together by the control unit (5). For example, in the first scan, segments of 10 degrees are scanned consecutively for recording the figures and the 360 degree turn is completed. Afterwards, in similar fashion, scanning is performed by separating into segments of 30 and 60 degrees and the 360 degree turn is repeated for each one. Consequently, analyzing figures of different sizes by clarifying provides to increase the chance of recognizing the figures in the latter scans if not recognized in the former scan and to establish the relations of the figures with one another.

The positions of the figures on the cup (F) and the saucer (P) formed by the coffee grounds (T) affects the scenario. The positions of the figures detected by the camera (3) are defined by polar coordinates (r, θ) and the position data are used in the scenario formed by the control unit (5).

During the scan of the camera (3), the figures below a certain size are not included in the evaluation made by the control unit (5). By means of this elimination, the very small coffee grounds (T) marks are left outside the scope of evaluation thereby preventing the increase the process load by the parasitic images.

In the coffee machine (1) of the present invention, coffee can be made by placing a boiling container (C: coffee pot) inside the chamber (8).

In another embodiment of the present invention, in the coffee machine (1) a chamber (108) is provided only for performing coffee boiling process besides the chamber (8) wherein interpretation of the coffee grounds (T) is made. For example, the coffee machine (1) is configured to comprise two chambers (8, 108) adjacent to one another, coffee boiling process with a coffee pot (C) is performed in the boiling chamber (108), and in the adjacent chamber (8) the process of reading-interpreting the coffee grounds (T) marks is performed.

The coffee machine (1) of the present invention, interpreting the coffee grounds (T) marks in the cup (F) and the saucer (P) is a feature that complements the feature of making Turkish coffee with the appropriate taste and consistency thereby satisfying the user demand of the coffee machine (1) for reading fortunes in coffee grounds besides making coffee.

## Claims

1. A coffee machine (1) used in preparing Turkish coffee and **characterized by** a coffee grounds fortune teller device (2) that reads and interprets the coffee grounds (T) marks settled on the containers such as coffee cup (F) wherein coffee is put and saucer (P) and presents these interpretations to the user.

2. A coffee machine (1) as in Claim 1 , **characterized by** the coffee grounds fortune teller device (2) that comprises a camera (3) that scans the inner surface of the cup (F) or the saucer (P) for taking images of the coffee ground marks (T) on these surfaces.

3. A coffee machine (1) as in Claim 2, **characterized by** the coffee grounds fortune teller device (2) that comprises a memory (4) wherein the symbols, each having a different meaning and a significance level to which the figures formed by the coffee grounds (T) detected with the camera (3) will be compared and the interpretations of these symbols are recorded.

4. A coffee machine (1) as in Claim 3, **characterized by** the coffee grounds fortune teller device (2) comprising a control unit (5) that matches the figures scanned by the camera (3) with the symbols in the memory (4) and prepares a scenario to be presented to the user by incorporating the interpretations relating to the symbols with a software like fuzzy logic such that content integrity is maintained.

5. A coffee machine (1) as in Claim 4, **characterized by** the coffee grounds fortune teller device (2) comprising the control unit (5) that analyzes the coffee grounds (T) marks detected by scanning with the camera (3) in two categories as the big figures (main lines) and small figures thereby forming an integrated scenario by combining the interpretations of the big figures and the small figures.

6. A coffee machine (1) as in Claim 5, **characterized by** the coffee grounds fortune teller device (2) comprising the control unit (5) that compares and interprets the data stored in the memory (4) like the proportion of the dark and light colored areas to each other and the changes from the dark colored areas to light colored areas and the big figures (main lines) detected by the camera (3) with the information in the memory (4).

7. A coffee machine (1) as in Claim 5, **characterized by** the coffee grounds fortune teller device (2) comprising the control unit (5) that compares the small figures detected by the camera (3) with the symbols stored in the memory (4) and after establishing resemblance with the small figure caught by the camera (3) to the symbol in the memory (4) assigning the small figure the meaning of the symbol it resembles.

8. A coffee machine (1) as in any one of the Claims 2 to 7, **characterized by** the coffee grounds fortune teller device (2) comprising a movement mechanism (7) that moves the cup (F), the saucer (P) or the camera (3).

9. A coffee machine (1) as in any one of the Claims 2 to 8, **characterized by** the coffee grounds fortune teller device (2) comprising the camera (3) that scans all around (360 degrees) the inner surface of the cup (F) and the saucer (P).

10. A coffee machine (1) as in any one of the Claims 4 to 9, **characterized by** the coffee grounds fortune teller device (2) comprising the control unit (5) that uses the positioning data of the figures on the cup (F) and the saucer (P) surfaces, positions of which are determined by polar coordinates.

11. A coffee machine (1) as in Claims 2 and 4, **characterized by** the coffee grounds fortune teller device (2) comprising the control unit (5) that leaves the figures below a certain size outside the scope of evaluation during the scan of the camera (3).

12. A coffee machine (1) as in Claim 4, **characterized by** the coffee grounds fortune teller device (2) comprising a telling means (6) for transmitting the scenario prepared by the control unit (5) to the user.

13. A coffee machine (1) as in any one of the above claims, **characterized by** a coffee grounds fortune teller device (2) comprising a chamber (8) wherein the cup (F), and/or the saucer (P) are placed for reading - interpreting the coffee grounds (T) marks, a temperature sensor (9) that detects the temperature of the cup (F) and the saucer (P), an alarm (10) that warns the user visually and/or aurally at the start and end of the coffee ground (T) interpretation process, an indicator (11) for placing the cup (F) or the saucer (P) in the proper position in the chamber (8) and a light source (12) for illuminating the inner surface of the cup (F) or the saucer (P).

14. A coffee machine (1) as in Claim 13, **characterized by** a chamber (108) wherein coffee boiling process can be performed by placing a coffee pot (C) therein.
